# EUROPEAN PATENT SPECIFICATION

(11) **EP 1 505 115 B1**
(45) Date of publication and mention of the grant of the patent: **14.11.2007**
(21) Application number: 04103512.2
(22) Date of filing: 22.07.2004
(51) Int. Cl.: C08L 21/00, C08K 3/22, B60C 1/00, C08J 3/22

(54) **A rubber composition containing nanoscaled zinc oxide particles**
Kautschukzusammensetzung, die Zinkoxidpartikel im Nanometergrössenbereich enthält
Composition de caoutchouc contenant des particules d'oxyde de zinc de taille nanométriques

(30) Priority: 29.07.2003 US 631045
(43) Date of publication of application: 09.02.2005
(73) Proprietor: THE GOODYEAR TIRE & RUBBER COMPANY, Akron, Ohio 44316-0001 (US)
(72) Inventor: ZIMMER, René Jean, L-1232, Howald (LU); BOES, Claude Ernest Felix, L-9147, Erpeldange (LU)
(74) Representative: Kutsch, Bernd

(56) References cited:
- DE-A- 2 325 557
- DE-B- 1 299 419
- US-B1- 6 225 397
- DATABASE CA [Online] CHEMICAL ABSTRACTS SERVICE, COLUMBUS, OHIO, US; 22 July 2004 (2004-07-22), CHEN, YUEHUI: "Nanometer zinc oxide-containing rubber composition with long scorching time and improved mechanical properties and its kneading method" XP002307145 retrieved from STN Database accession no. 141:72803 & CN 1 386 788 A (SHANGHAI UNIVERSITY OF ENGINEERING TECHNOLOGY, PEOP. REP. CHINA) 25 December 2002 (2002-12-25) -& DATABASE WPI Section Ch, Week 200328 Derwent Publications Ltd., London, GB; Class A60, AN 2003-279746 XP002307317 -& CN 1 386 788 A (UNIV SHANGHAI ENG & TECHNOLOGY) 25 December 2002 (2002-12-25)
- DATABASE CA [Online] CHEMICAL ABSTRACTS SERVICE, COLUMBUS, OHIO, US; 11 March 2004 (2004-03-11), ZHOU, ZUOWAN ET AL: "Rail cushion rubber compounding containing nanosized zinc oxide" XP002307323 retrieved from STN Database accession no. 140:183001 & CN 1 368 518 A (RENTAI INDUSTRIAL CO., LTD., CHENGDU, PEOP. REP. CHINA) 11 September 2002 (2002-09-11)

## Description

### Background of the Invention

Nanomaterials are materials with particles having a diameter from 1 to 100 nanometers. The use of such nanomaterials in rubber is known from US-A-4,644,988 describing a tire tread compound containing a styrene-butadiene copolymer rubber reinforced with carbon black with a particle size smaller than 20 nanometers. US-A-6,121,346 and 6,225,397 disclose the use of silica fillers with primary particles having a particle size in the range of from 5 to 30 nanometers in a rubber also comprising zinc oxide in an amount of 2 phr to 5 phr.

US-A-5,066,420 presents a method to produce nanoscaled silica particles having a spherical form and a mean particle diameter of between 10 nanometers and 100 nanometers.

A method to produce a nanoscaled zinc oxide with a mean particle diameter of from 5 nanometers to 10 nanometers starting from commercially available, comparatively cheap educts is described in DE-A-199 07 704.
These zinc oxide particles can be redispersed in water, organic solvents or mixtures with organic solvents or surface modifying substances in order to get a sol with a large extent of primary particles.

CN-A-1386788 discloses the use of 1-3 phr of nanoscaled zinc oxide particles in a rubber composition. The particles have a size between 10 and 80 nm. In a second embodiment, a compound with zinc oxide particles having a size between 60 to 80 nm and 60 phr of CaCO₃ is described.

CN-A-1368518 discloses a rubber composition for under-rail cushion including a zinc oxide powder having a particle size of 20 to 40 nm. The amount of zinc oxide in the rubber composition is between 2 and 10 phr.

DE-A-1299419 describes a rubber composition for a tire tread having about 2 weight % of zinc, wherein zinc oxide attached to silica is premixed with rubber before adding further additives. This compound is then cured without free zinc oxide.

The increasing concern regarding the potential environmental and health effects of the release of zinc oxide (ZnO), which is also often accompanied by a release of cadmium, makes it eligible to reduce its content in rubber compositions, especially in rubber compositions used in the production of tires, but also to retain its positive effects in the curing/vulcanization process.

### Summary of the Invention

The present invention relates to a tire according to claims 1 and 5 methods to process rubber compositions which can be used to manufacture a component of such a tire.

### Detailed Description of the Invention

There is disclosed a rubber composition comprising (a) 100 parts by weight of at least one rubber containing olefinic unsaturation, (b) 1 to 250 phr of a filler, and (c) 0.1 to 1.5 phr of zinc oxide particles having a mean diameter of less than 20 nanometers.
Furthermore, there is disclosed a sulfur-vulcanized rubber composition which is prepared by heating said rubber composition to a temperature ranging from 100°C to 200°C in the presence of a sulfur-vulcanizing agent.

In addition, there is disclosed a first method of processing a rubber composition comprising mixing (a) 100 parts by weight of at least one rubber containing olefinic unsaturation with (b) a mixture comprising 1 to 250 phr of a filler and 0.1 to 1.5 phr of zinc oxide particles having a mean diameter of less than 20 nanometers; a second method of processing a rubber composition comprising mixing (a) 100 parts by weight of at least one rubber containing olefinic unsaturation, (b) 1 to 250 phr of a filler, and (c) a mixture of 0.1 to 1.5 phr of zinc oxide particles having a mean diameter of less than 20 nanometers with a processing additive; and a third method of processing a rubber composition comprising mixing (a) 100 parts by weight of at least one rubber containing olefinic unsaturation with (b) a master-batch comprising a polymer and 0.1 to 1.5 phr of zinc oxide particles having a mean diameter of less than 20 nanometers. In one aspect of this invention, the filler comprises primary particles of silica having a diameter in a range of from 5 to 25 nanometers, which form at least partially clusters or aggregates having a diameter in a range of from 40 nanometers to 500 nanometers.

In an other aspect of this invention, the rubber composition comprises 0.2 to 1.0 phr of zinc oxide particles having a mean diameter of less than 20 nanometers.

In an other aspect of this invention, the zinc oxide particles have a mean diameter of less than 12 nanometers.

In a further aspect of the invention, the filler is present in an amount ranging from 35 to 110 phr.

The term "phr" as used herein, and according to conventional practice, refers to "parts by weight of a respective material per 100 parts by weight of rubber, or elastomer."

The present invention may be used to process sulfur-vulcanizable rubbers or elastomers containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include silicon-coupled and tin-coupled star-branched polymers. The preferred rubber or elastomers are polybutadiene and SBR.

In one aspect, the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers. The 3,4-polyisoprene rubber (3,4-PI) is considered beneficial for a purpose of enhancing a tire's traction when it is used in a tire tread composition. The 3,4-PI, and use thereof, is more fully described in US-A-5,087,668. The cis 1,4-polybutadiene rubber (BR) is considered to be beneficial for a purpose of enhancing a tire tread's wear.

The filler may also, especially in addition to silica, comprise carbon black, modified carbon black, silica, modified silica, silicon carbide, boehmite, synthetic aluminosilicates, natural aluminosilicates, titanium dioxide and organic fillers such as ground forms of polystyrene, polypropylene, polyurethane and phenolic resins.

Representative carbon blacks which are suitable include those known under the ASTM designation S212, N103, N110, N121, N166, N219, N220, N231, N234, N242, N270, N285, N293, N294, S300, S301, S315, N326, N327, N330, N332, N339, N347, N351, N356, N358, N363, N375, N539, N542, N550, N568, N601, N650, N660, N683, N741, N754, N762, N765, N774, N785 and N787.

Siliceous fillers that can be used include, for example, silicates and both pyrogenic and precipitated finely dispersed silicas. Such highly dispersed silicas (silicon dioxide) for use as the small particles have a BET surface area in the range of between 50 and 400 square meters per gram. The BET method of measuring surface area is described in the Journal of the American Chemical Society, Volume 60, page 304 (1930). Such silica fillers can be produced, for example, by precipitation from solutions of silicates; e.g., sodium silicate.

The silica fillers can also be produced by a silica Sol-Gel process including other metal-oxide gels, such as ZrO₂, TiO₂ and Al₂O₃. There can also be used flame hydrolysis of volatile silicon halides; e.g., silicon tetrachloride, or by electric arc processes. These silicas, in a given case, can also be present as mixed oxides or oxide mixtures with oxides of the metals aluminum (alumina), magnesium (magnesium oxide), calcium (calcium oxide), barium (barium oxide), zinc (zinc oxide), zirconium (zirconium oxide) or titanium (titanium dioxide).

Synthetic silicates include, for example, aluminum silicate or alkaline earth silicates, such as magnesium or calcium silicates with specific surface areas of from 20 to 400 square meters per gram.

Preferably, the siliceous filler is of the type obtained by precipitation from a soluble silicate; e.g., sodium silicate, as outlined in further detail in US-A-2,940,830 and especially in US-A-5,066,420.

These precipitated amorphous hydrates silica pigments have an SiO₂ content of at least 80 or 85, preferably at least 90, more preferably 93 to 97 percent by weight on an anhydrous basis; i.e., including bound water.

The continuous precipitation method according to US-A-5,066,420 involves precipitation of a sodium silicate solution and subsequent growing conditions conducive to the formation of nanoscaled primary particles of silica. It is readily understood by those having skill in the art that the rubber composition can be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, waxes, antioxidants and antiozonants and peptizing agents.

As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1.5 to 6 phr being preferred. Typical amounts of tackifier resins, if used, comprise 0.5 to 10 phr, usually 1 to 5 phr. Typical amounts of processing aids comprise 1 phr to 50 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 to 346. Typical amounts of antiozonants comprise 1 to 5 phr. Typical amounts of fatty acids, if used, which can include stearic acid comprise 0.5 to 3 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

In one aspect of the present invention, the sulfur-vulcanizable rubber composition is sulfur-cured or vulcanized. Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition containing the filler and the zinc oxide can also be subjected to a thermomechanical mixing step in the non-productive stage comprising a mechanical working in a mixer or extruder at a temperature between 140°C and 190°C for a period of time suitable in order to produce a rubber. The appropriate duration of the thermomechanical working varies as a function of the operating conditions and the volume and nature of the components. For example, the thermomechanical working may be from 1 to 20 minutes.

Vulcanization of the rubber composition of the present invention is preferably conducted at temperatures ranging from 110°C to 180°C.

Any of the usual vulcanization processes may be used such as heating in a press or mold, heating with superheated steam or hot air or in a salt bath.

Upon vulcanization of the sulfur-vulcanized composition, the rubber composition of this invention can be used for various purposes. For example, the sulfur-vulcanized rubber composition may be in the form of a tire, belt or hose. In case of a tire, it can be used for various tire components. Such tires can be built, shaped, molded and cured by various methods which are known and will be readily apparent to those having skill in such art. Preferably, the rubber composition is used in the tread of a tire. As can be appreciated, the tire may be a passenger tire, aircraft tire, truck tire and the like. Preferably, the tire is a passenger tire. The tire may also be a radial or bias, with a radial tire being preferred.

In a first preferred embodiment of the invention, zinc oxide particles with a mean diameter of less than 20 nanometers, preferably of less than 12 nanometers, are prepared according to the teaching of DE-A-199 07 704. These particles are mixed with a processing additive like a wax, a fatty acid, a resin, or, preferably, an oil leading to a sol with dispersed nanoscaled zinc oxide particles therein. Then, this mixture is added to the prepared rubber composition containing the filler in the non-productive stage. The amount of zinc oxide in the mixture with the processing additive is such that the rubber composition comprises 0.2 to 1.0 phr, for example 0.8 phr, 0.6 phr or 0.4 phr, of zinc oxide after mixing. This process uses the possibility to redisperse nanoscaled zinc oxide particles prepared according to DE-A-199 07 704 in organic materials like a usual processing additive in the rubber mixing art, and then to introduce the zinc oxide together with the processing additive into the prepared rubber composition preferably in the non-productive stage.

In summary, this process allows a considerable reduction of zinc oxide in the rubber composition, if desired, without negative impact on the following curing or vulcanization process due to the high dispersivity and high chemical activity of the nanoscaled zinc oxide particles.

In a second preferred embodiment of the invention, zinc oxide particles with a mean diameter of less than 20 nanometers, preferably of less than 12 nanometers, are prepared according to the teaching of DE-A-199 07 704 and added to an preferably anhydrous silica powder with nanoscaled silica particles prepared according to US-A-5,066,420. Then, this mixture of a silica filler and nanoscaled zinc oxide particles is undergone the well-known "pearl-process" to form pearls with a diameter of about 2 mm, for example, before being added to the prepared rubber composition preferably in the non-productive stage. This process uses the possibility to introduce the zinc oxide particles together with the silica particles like a "filler" into the rubber composition. The amount of zinc oxide in the mixture with the silica filler is such that the rubber composition comprises 0.2 to 1.0 phr, for example 0.8 phr, 0.6 phr or 0.4 phr, of zinc oxide after mixing.

Again, this process allows a considerable reduction of zinc oxide in the rubber composition, if desired, without negative impact on the following curing or vulcanization process due to the high dispersivity and chemical activity of the nanoscaled zinc oxide particles. It also leads, in tendency, to smaller silica particles as the nanoscaled zinc oxide particles hamper a re-aggregation of silica particles and ease their redispersion within the rubber composition.

In a third preferred embodiment of the invention, zinc oxide particles with a mean diameter of less than 20 nanometers, preferably of less than 12 nanometers, are prepared according to the teaching of DE-A-199 07 704 and then added to a master-batch with at least one polymer. The preparation of such a masterbatch is described in more detail in US-A-6,555,606. Preferably, the polymer is one of the polymers to be added to the rubber composition anyway. Afterwards, this masterbatch is mixed with the prepared rubber composition, preferably in the non-productive stage. The amount of zinc oxide in the master batch is such that the rubber composition comprises 0.2 to 1.0 phr, for example 0.8 phr, 0.6 phr or 0.4 phr, of zinc oxide after mixing.

Again, this process allows a considerable reduction of zinc oxide in the rubber composition, if desired, without negative impact on the following curing or vulcanization process due to the high dispersivity and chemical activity of the nanoscaled zinc oxide particles.

In a fourth embodiment of the invention, zinc oxide particles with a mean diameter of less than 20 nanometers, preferably of less than 12 nanometers, are prepared according to the teaching of DE-A-199 07 704 and then treated in a plasma. This plasma treatment can be done, for example, while mixing the zinc oxide particles in a drum. It leads to a modification of the surface of the zinc oxide particles with regard to their chemical and electrical properties thus easing their dispersibility in a rubber composition. Afterwards, the plasma activated ZnO particles are directly added to a prepared rubber composition in an amount of 0.2 to 1.0 phr, for example 0.8 phr or 0.6 phr or 0.4 phr, preferably in the non-productive stage and mixed with it.

## Claims

1. A tire having a tread comprising a rubber composition, the rubber composition comprising :
(a) 100 parts by weight of at least one rubber containing olefinic unsaturation,
(b) 1 to 250 phr of a filler, and
(c) 0.1 to 1.5 phr of zinc oxide particles having a mean diameter of less than 20 nanometers.

2. The tire of claim 1, wherein the zinc oxide particles have a mean diameter of less than 12 nanometers.

3. The tire according to claim 1 or 2, wherein said filler comprises primary particles of silica particles having a diameter in a range of 5 to 25 nanometers which form at least partially clusters or aggregates having a diameter in a range of from 40 nanometers to 500 nanometers.

4. The tire according to at least one of the previous claims, comprising at least one additional diene-based elastomer.

5. A tire having a tread comprising a sulfur-vulcanized rubber composition which has been prepared by heating a rubber composition to a temperature ranging from 100°C to 200°C in the presence of a sulfur-vulcanizing agent, the rubber composition comprising:
(a) 100 parts by weight of at least one rubber containing olefinic unsaturation,
(b) 1 to 250 phr of a filler, and
(c) 0.1 to 1.5 phr of zinc oxide particles having a mean diameter of less than 20 nanometer.

6. A method of processing a rubber composition, the method comprising the steps of:
(i) mixing 1 to 250 phr of a filler with 0.1 to 1.5 phr of zinc oxide particles having a mean diameter of less than 20 nanometer, and
(ii) mixing said mixture with 100 parts by weight of at least one rubber containing olefinic unsaturation.

7. A method of processing a rubber composition, the method comprising the steps of:
(i) mixing a processing additive with 0.1 to 1.5 phr of zinc oxide particles having a mean diameter of less than 20 nanometer, and
(ii) mixing said mixture with a second mixture comprising of 1 to 250 phr of a filler and 100 parts by weight of at least one rubber containing olefinic unsaturation.

8. A method of processing a rubber composition, the method comprising the steps of:
(i) preparing a masterbatch comprising 0.1 to 1.5 phr of zinc oxide particles having a mean diameter of less than 20 nanometer and at least one polymer,
(ii) mixing said masterbatch with a mixture comprising 100 parts by weight of at least one rubber containing olefinic unsaturation and 1 to 250 phr of a filler.

9. The method of claim 6, 7 or 8, wherein said rubber composition is thermomechanically mixed in step (ii) at a rubber temperature in a range of from 140°C to 190°C for a mixing time of from 1 to 20 minutes.

## Patentansprüche

1. Reifen mit einer Lauffläche, die eine Kautschukzusammensetzung umfasst, wobei die Kautschukzusammensetzung umfasst :
(a) 100 Gewichtsteile mindestens eines olefinische Ungesättigtheit umfassenden Kautschuks,
(b) 1 bis 250 ThK eines Füllstoffs, und
(c) 0,1 bis 1,5 ThK Zinkoxidpartikel mit einem durchschnittlichen Durchmesser von weniger als 20 Nanometern.

2. Reifen von Anspruch 1, wobei die Zinkoxidpartikel einen durchschnittlichen Durchmesser von weniger als 12 Nanometern haben.

3. Reifen nach Anspruch 1 oder 2, wobei der Füllstoff primäre Partikel von Silikapartikeln mit einem Durchmesser in einem Bereich von 5 bis 25 Nanometern umfasst, die mindestens teilweise Cluster oder Aggregate mit einem Durchmesser in einem Bereich von 40 Nanometern bis 500 Nanometern bilden.

4. Reifen nach mindestens einem der vorangehenden Ansprüche, der mindestens ein zusätzliches dienbasiertes Elastomer umfasst.

5. Reifen mit einer Lauffläche, die eine schwefelvulkanisierte Kautschukzusammensetzung umfasst, die durch Erhitzen einer Kautschukzusammensetzung auf eine Temperatur im Bereich von 100 °C bis 200 °C in Gegenwart eines Schwefelvulkanisationsmittels hergestellt worden ist, wobei die Kautschukzusammensetzung umfasst :
(a) 100 Gewichtsteile mindestens eines olefinische Ungesättigtheit umfassenden Kautschuks,
(b) 1 bis 250 ThK eines Füllstoffs, und
(c) 0,1 bis 1,5 ThK Zinkoxidpartikel mit einem durchschnittlichen Durchmesser von weniger als 20 Nanometern.

6. Verfahren zur Verarbeitung einer Kautschukzusammensetzung, wobei das Verfahren die Schritte umfasst des :
(i) Mischens von 1 bis 250 ThK eines Füllstoffs mit 0,1 bis 1,5 ThK Zinkoxidpartikeln mit einem durchschnittlichen Durchmesser von weniger als 20 Nanometern, und
(ii) Mischens dieses Gemischs mit 100 Gewichtsteilen mindestens eines olefinische Ungesättigtheit enthaltenden Kautschuks.

7. Verfahren zur Verarbeitung einer Kautschukzusammensetzung, wobei das Verfahren die Schritte umfasst des :
(i) Mischens eines Verarbeitungszusatzes mit 0,1 bis 1,5 ThK Zinkoxidpartikeln mit einem durchschnittlichen Durchmesser von weniger als 20 Nanometern, und
(ii) Mischens dieses Gemischs mit einem zweiten Gemisch, das 1 bis 250 ThK eines Füllstoffs und 100 Gewichtsteile mindestens eines olefinische Ungesättigtheit enthaltenden Kautschuks umfasst.

8. Verfahren zur Verarbeitung einer Kautschukzusammensetzung, wobei das Verfahren die Schritte umfasst des :
(i) Herstellens eines Masterbatchs, das 0,1 bis 1,5 ThK Zinkoxidpartikel mit einem durchschnittlichen Durchmesser von weniger als 20 Nanometern und mindestens ein Polymer umfasst, und
(ii) Mischens dieses Masterbatchs mit einem Gemisch, das 100 Gewichtsteile mindestens eines olefinische Ungesättigtheit enthaltenden Kautschuks und 1 bis 250 ThK eines Füllstoffs umfasst.

9. Verfahren von Anspruch 6, 7 oder 8, wobei die Kautschukzusammensetzung in Schritt (ii) auf einer Kautschuktemperatur in einem Bereich von 140 °C bis 190 °C für eine Mischzeit von 1 bis 20 Minuten thermomechanisch gemischt wird.

## Revendications

1. Bandage pneumatique possédant une bande de roulements comprenant une composition de caoutchouc, la composition de caoutchouc comprenant :
(a) à concurrence de 100 parties en poids, au moins un caoutchouc contenant une insaturation oléfinique ;
(b) à concurrence de 1 à 250 phr, une matière de charge ; et
(c) à concurrence de 0,1 à 1,5 phr, des particules d'oxyde de zinc possédant un diamètre moyen inférieur à 20 nm.

2. Bandage pneumatique selon la revendication 1, dans lequel les particules d'oxyde de zinc possèdent un diamètre moyen inférieur à 12 nm.

3. Bandage pneumatique selon la revendication 1 ou 2, dans lequel ladite matière de charge comprend des particules primaires constituées par des particules de silice possédant un diamètre dans la plage de 5 à 25 nm qui forment au moins en partie des grappes ou des agrégats dont le diamètre se situe dans la plage de 40 nm à 500 nm.

4. Bandage pneumatique selon au moins une des revendications précédentes, comprenant au moins un élastomère supplémentaire à base diénique.

5. Bandage pneumatique possédant une bande de roulement comprenant une composition de caoutchouc vulcanisé au soufre, qui a été préparée par chauffage d'une composition de caoutchouc à une température qui se situe dans la plage de 100 °C à 200 °C en présence d'un agent de vulcanisation au soufre, la composition de caoutchouc comprenant :
(a) à concurrence de 100 parties en poids, au moins un caoutchouc contenant une insaturation oléfinique ;
(b) à concurrence de 1 à 250 phr, une matière de charge ; et
(c) à concurrence de 0,1 à 1,5 phr, des particules d'oxyde de zinc possédant un diamètre moyen inférieur à 20 nm.

6. Procédé de traitement d'une composition de caoutchouc, le procédé comprenant les étapes consistant à :
(i) mélanger une matière de charge, à concurrence de 5 à 250 phr, avec des particules d'oxyde de zinc, à concurrence de 0,1 à 1,5 phr, lesdites particules possédant un diamètre moyen inférieur à 20 nm ; et
(ii) mélanger ledit mélange avec, à concurrence de 100 parties en poids, au moins un caoutchouc contenant une insaturation oléfinique.

7. Procédé de traitement d'une composition de caoutchouc, le procédé comprenant les étapes consistant à :
(i) mélanger un additif de traitement, avec des particules d'oxyde de zinc, à concurrence de 0,1 à 1,5 phr, lesdites particules possédant un diamètre moyen inférieur à 20 nm ; et
(ii) mélanger ledit mélange avec un deuxième mélange comprenant, à concurrence de 1 à 250 parties en poids, une matière de charge et, à concurrence de 100 parties en poids, au moins un caoutchouc contenant une insaturation oléfinique.

8. Procédé de traitement d'une composition de caoutchouc, le procédé comprenant les étapes consistant à :
(i) préparer un mélange mère comprenant des particules d'oxyde de zinc, à concurrence de 0,1 à 1,5 phr, lesdites particules possédant un diamètre moyen inférieur à 20 nm ; et
(ii) mélanger ledit mélange mère avec un mélange comprenant, à concurrence de 1 à 250 parties en poids, une matière de charge et, à concurrence de 100 parties en poids, au moins un caoutchouc contenant une insaturation oléfinique.

9. Procédé selon la revendication 6, 7 ou 8, dans lequel ladite composition de caoutchouc est soumise à un mélange thermomécanique à l'étape (ii) à une température du caoutchouc dans la plage de 140 °C à 190 °C pendant un laps de temps de mélange de 1 à 20 minutes.
